# EUROPEAN PATENT APPLICATION

(11) **EP 4 780 108 A1**
(43) Date of publication of application: **22.07.2026**
(21) Application number: 24884670.1
(22) Date of filing: 28.10.2024
(51) Int. Cl.: H04W 72/1268

(54) **UPLINK TRANSMISSION METHODS AND COMMUNICATION APPARATUS**

(30) Priority: 02.11.2023 CN 202311458713
(71) Applicant: HUAWEI TECHNOLOGIES CO., LTD., Shenzhen 518129 (CN)
(72) Inventor: XIA, Jinhuan, Shenzhen, Guangdong 518129 (CN)
(74) Representative: Isarpatent
(86) International application number: PCT/CN2024/127807
(87) International publication number: WO 2025/092667

(57) **Abstract**

An uplink transmission method and a communication apparatus are provided. The method includes: sending first uplink information when determining, at a first moment or before the first moment, that a first time domain unit overlaps a second time domain unit. The first moment is prior to a second moment and is separated from the second moment by first duration, the second moment corresponds to a start moment of the first time domain unit, the first time domain unit is a time domain resource occupied by an n^{th} frequency hopping among m frequency hoppings, the m frequency hoppings are used to transmit a first-type SRS, the second time domain unit is a time domain resource occupied by the first uplink information, the first duration is associated with at least one of the first-type SRS, the first uplink information, or a PDCCH, and the PDCCH is used to schedule the first uplink information. The technical solutions of this application may be applied to the field of wireless communication. When a time domain resource required for sending an SRS in a frequency hopping manner conflicts with a time domain resource required for sending other uplink information, the technical solutions of this application can resolve the conflict.

## Description

This application claims priority to Chinese Patent Application No. 202311458713.8, filed with the China National Intellectual Property Administration on November 2, 2023 and entitled "UPLINK TRANSMISSION METHOD AND COMMUNICATION APPARATUS", which is incorporated herein by reference in its entirety.

### TECHNICAL FIELD

This application relates to the wireless communication field, and more specifically, to an uplink transmission method and a communication apparatus.

### BACKGROUND

In cellular network-based uplink positioning, a terminal device may send a sounding reference signal (sounding reference signal, SRS) to a network device, so that the network device determines a position of the terminal device based on a positioning technology. However, measurement accuracy of the positioning technology is subject to a bandwidth occupied by the SRS. A larger bandwidth occupied by the SRS indicates higher measurement accuracy of the positioning technology, and a more accurate determined position of the terminal device.

When a bandwidth for single SRS transmission supported by the terminal device is relatively small, the terminal device may send the SRS in a frequency hopping manner, and the network device receives and processes the SRS sent by the terminal device through frequency hopping, so that the measurement accuracy of the positioning technology can be improved. For example, the terminal device sends an SRS with a bandwidth of 20 megahertz (Megahertz, MHz) on five frequency hopping subbands, and the network device may obtain, after receiving and processing the SRS on the five frequency hopping subbands, a measurement result equivalent to or similar to a measurement result corresponding to an SRS with a bandwidth of 100 MHz.

Generally, the terminal device sends the SRS based on a frequency hopping pattern configured by the network device. Because the frequency hopping pattern is flexible, between two consecutive frequency hopping subbands in time domain, the network device may schedule or configure the terminal device to send an uplink signal or an uplink channel. However, duration required for the terminal device to switch from a resource position for sending a previous-hop SRS to a resource position for sending the uplink signal or the uplink channel, and then switch from the resource position for sending the uplink signal or the uplink channel to a resource position for sending a current-hop SRS may be greater than a time domain interval between two consecutive frequency hoppings. Consequently, a time domain resource for sending the uplink signal or the uplink channel conflicts with a time domain resource for sending the current-hop SRS. Alternatively, a time domain resource position at which the network device needs to schedule the uplink signal or the uplink channel just overlaps a time domain resource on which the terminal device needs to send a specific-hop SRS.

Therefore, when a resource for sending an SRS by the terminal device through frequency hopping conflicts with a time domain resource for sending the uplink signal or the uplink channel, how to perform uplink transmission becomes an urgent problem to be resolved.

### SUMMARY

This application provides an uplink transmission method and a communication apparatus, so that when a time domain resource required for sending an SRS in a frequency hopping manner conflicts with a time domain resource required for sending other uplink information, the conflict can be resolved.

According to a first aspect, an uplink transmission method is provided. The method may be performed by a terminal device or a component (for example, a chip or a chip system) of the terminal device. This is not limited in this application. The method includes: sending first uplink information when determining, at a first moment or before the first moment, that a first time domain unit overlaps a second time domain unit, where the first moment is prior to a second moment and is separated from the second moment by first duration, the second moment corresponds to a start moment of the first time domain unit, the first time domain unit is a time domain resource occupied by an n^{th} frequency hopping among m frequency hoppings, the m frequency hoppings are used to transmit an SRS, the second time domain unit is a time domain resource occupied by the first uplink information, the first duration is associated with at least one of the SRS, the first uplink information, or a physical downlink control channel (physical downlink control channel, PDCCH), and the PDCCH is used to schedule the first uplink information.

According to a second aspect, an uplink transmission method is provided. The method may be performed by a terminal device or a component (for example, a chip or a chip system) of the terminal device. This is not limited in this application. The method includes: sending first uplink information when determining, at a first moment or before the first moment, that a first time domain unit overlaps a second time domain unit, where the first moment is after a third moment and is separated from the third moment by first duration, the third moment corresponds to an end moment of a PDCCH, the PDCCH is used to schedule the first uplink information, the first time domain unit is a time domain resource occupied by an n^{th} frequency hopping among m frequency hoppings, the m frequency hoppings are used to transmit an SRS, the second time domain unit is a time domain resource occupied by the first uplink information, and the first duration is associated with at least one of the SRS, the first uplink information, or the PDCCH.

In the foregoing technical solution, the first moment is determined based on a start moment at which the terminal device sends each hop of SRS or based on the received PDCCH. Before the first moment, if the terminal device can determine that a time domain resource for the first uplink information conflicts with a time domain resource for sending the SRS through frequency hopping, the terminal device sends the first uplink information and does not send the SRS. This helps resolve a problem of a conflict between an SRS resource and another uplink information resource in a process of sending the SRS through frequency hopping.

That the second moment corresponds to the start moment of the first time domain unit may include any one of the following: The second moment is the start moment of the first time domain unit; the second moment is a moment before the start moment of the first time domain unit, and the second moment is separated from the start moment of the first time domain unit by first preset duration; or the second moment is a moment after the start moment of the first time domain unit, and the second moment is separated from the start moment of the first time domain unit by first preset duration. For example, the first preset duration may be associated with a capability of the terminal device. For example, the first preset duration may be 0.01 milliseconds (ms), may be 0.05 ms, or may be other duration.

That the third moment corresponds to the end moment of the PDCCH may include any one of the following: The third moment is an end moment at which the terminal device receives the PDCCH; the third moment is a moment before the end moment of the PDCCH, and the third moment is separated from the end moment of the PDCCH by second preset duration; or the third moment is a moment after the end moment of the PDCCH, and the third moment is separated from the end moment of the PDCCH by second preset duration. For example, the second preset duration may be associated with a capability of the terminal device. For example, the second preset duration may be 0.01 milliseconds (ms), may be 0.05 ms, or may be other duration.

It should be noted that the SRS in this application may be an SRS that is used for positioning and that is sent in a frequency hopping manner, and each of the m frequency hoppings may occupy one symbol (symbol) or a plurality of symbols.

In some implementations, both m and n are positive integers, and m is greater than or equal to n.

In some implementations, before it is determined that the first time domain unit overlaps the second time domain unit, the method further includes: receiving the PDCCH, and determining, based on the PDCCH, a second time-frequency unit required for sending the first uplink information.

In some implementations, before it is determined that the first time domain unit overlaps the second time domain unit, the method further includes: receiving resource configuration information for sending the first uplink information, and determining, based on the resource configuration information, a second time-frequency unit required for sending the first uplink information.

In some implementations, when it is not determined, at the first moment or before the first moment, that the first time domain unit overlaps the second time domain unit, the SRS is sent, and the first uplink information is not sent.

In some implementations, when it is determined, at the first moment or before the first moment, that the first time domain unit overlaps the second time domain unit, the SRS is not sent in the first time domain unit.

With reference to the first aspect or the second aspect, in some implementations of the first aspect or the second aspect, the sending the first uplink information includes: sending the first uplink information on the second time domain unit. The method further includes: sending the SRS on a third time domain unit, where the third time domain unit is a part of the first time domain unit other than a part overlapping the second time domain unit.

In the foregoing technical solution, when the time domain resource for the first uplink information conflicts with the time domain resource required for sending the SRS through frequency hopping, after determining to send the first uplink information, a part that is of the SRS and that conflicts with the first uplink information is discarded, and the remaining part that is of the SRS and that does not conflict with the first uplink information is sent. This resolves a time domain resource conflict and further helps ensure accuracy of positioning performed by using a first-type SRS.

With reference to the first aspect or the second aspect, in some implementations of the first aspect or the second aspect, the method includes: The first duration is associated with a first subcarrier spacing, and the first subcarrier spacing is associated with at least one of the SRS, the first uplink information, or the PDCCH.

With reference to the first aspect or the second aspect, in some implementations of the first aspect or the second aspect, the first subcarrier spacing is a smallest subcarrier spacing among a subcarrier spacing for sending the SRS, a subcarrier spacing for sending the first uplink information, and a subcarrier spacing for receiving the PDCCH.

In the foregoing technical solution, a smallest subcarrier spacing is selected, to help maximize the first duration, so that the terminal device has sufficient time to prepare for sending the first uplink information.

With reference to the first aspect or the second aspect, in some implementations of the first aspect or the second aspect, the first subcarrier spacing is a smallest subcarrier spacing among a subcarrier spacing for sending the first uplink information and a subcarrier spacing for sending the SRS.

With reference to the first aspect or the second aspect, in some implementations of the first aspect or the second aspect, that the first duration is associated with the first subcarrier spacing includes: The first duration is determined based on the first subcarrier spacing and duration required for bandwidth part (bandwidth part, BWP) switching.

For example, the first duration includes first sub-duration and second sub-duration, the first sub-duration is determined based on the first subcarrier spacing, and the second sub-duration is determined based on the duration required for BWP switching.

In the foregoing technical solution, during determining the first duration, time required by the terminal device to perform BWP switching is considered, so that it can be ensured that the terminal device has sufficient time to perform BWP switching, to improve a success rate of sending the first uplink information.

With reference to the first aspect or the second aspect, in some implementations of the first aspect or the second aspect, the first duration is determined based on a capability of the terminal device.

With reference to the first aspect or the second aspect, in some implementations of the first aspect or the second aspect, the first uplink information includes a first uplink channel and/or a first uplink signal, the first uplink channel includes a physical uplink control channel (physical uplink control channel, PUCCH) or a physical uplink shared channel (physical uplink shared channel, PUSCH), the SRS is a first-type SRS, and the first uplink signal includes a second-type SRS.

For example, the first-type SRS may be an SRS of a specific type, for example, may be an SRS sent in a frequency hopping manner. More specifically, the first-type SRS may be a positioning SRS sent in the frequency hopping manner. The second-type SRS may be an SRS other than the SRS of the specific type, for example, an SRS other than the SRS sent in the frequency hopping manner.

According to a third aspect, an uplink transmission method is provided. The method may be performed by a terminal device or a component (for example, a chip or a chip system) of the terminal device. This is not limited in this application. The method includes: sending first uplink information when determining, at a moment corresponding to a first symbol or before the moment corresponding to the first symbol, that a first time domain unit overlaps a second time domain unit, where the first symbol is prior to a second symbol and is separated from the second symbol by M symbols, the second symbol is a start symbol of the first time domain unit, the first time domain unit is a time domain resource occupied by an n^{th} frequency hopping among m frequency hoppings, the m frequency hoppings are used to transmit an SRS, the second time domain unit is a time domain resource occupied by the first uplink information, the M symbols are associated with at least one of the SRS, the first uplink information, or a PDCCH, and the PDCCH is used to schedule the first uplink information.

According to a fourth aspect, an uplink transmission method is provided. The method may be performed by a terminal device or a component (for example, a chip or a chip system) of the terminal device. This is not limited in this application. The method includes: sending first uplink information when determining, at a moment corresponding to a first symbol or before the moment corresponding to the first symbol, that a first time domain unit overlaps a second time domain unit, where the first symbol is after a third symbol and is separated from the third symbol by M symbols, the third symbol is an end symbol of a PDCCH, the PDCCH is used to schedule the first uplink information, the first time domain unit is a time domain resource occupied by an n^{th} frequency hopping among m frequency hoppings, the m frequency hoppings are used to transmit an SRS, the second time domain unit is a time domain resource occupied by the first uplink information, the M symbols are associated with at least one of the SRS, the first uplink information, or the PDCCH.

With reference to the third aspect or the fourth aspect, in some implementations of the third aspect or the fourth aspect, the sending the first uplink information includes: sending the first uplink information on the second time domain unit, and sending the SRS on a third time domain unit, where the third time domain unit is a part of the first time domain unit other than a part overlapping the second time domain unit.

With reference to the third aspect or the fourth aspect, in some implementations of the third aspect or the fourth aspect, that the M symbols are associated with at least one of the SRS, the first uplink information, or the PDCCH includes: The M symbols are associated with a first subcarrier spacing, and the first subcarrier spacing is associated with at least one of the first-type SRS, the first uplink information, or the PDCCH.

With reference to the third aspect or the fourth aspect, in some implementations of the third aspect or the fourth aspect, that the first subcarrier spacing is associated with at least one of the SRS, the first uplink information, or the PDCCH includes: The first subcarrier spacing is a smallest subcarrier spacing among a subcarrier spacing for sending the SRS, a subcarrier spacing for sending the first uplink information, and a subcarrier spacing for receiving the PDCCH.

With reference to the third aspect or the fourth aspect, in some implementations of the third aspect or the fourth aspect, that the first subcarrier spacing is associated with at least one of the SRS, the first uplink information, or the PDCCH includes: The first subcarrier spacing is a smallest subcarrier spacing among a subcarrier spacing for sending the first uplink information and a subcarrier spacing for sending the SRS.

With reference to the third aspect or the fourth aspect, in some implementations of the third aspect or the fourth aspect, the M symbols are determined based on the first subcarrier spacing and duration required for BWP switching.

For example, N symbols in the M symbols are determined based on the first subcarrier spacing, and a quantity of remaining symbols in the M symbols other than the N symbols is determined based on the duration required for BWP switching.

With reference to the third aspect or the fourth aspect, in some implementations of the third aspect or the fourth aspect, the M symbols are determined based on a capability of the terminal device.

With reference to the third aspect or the fourth aspect, in some implementations of the third aspect or the fourth aspect, the first uplink information includes a first uplink channel or a first uplink signal, the first uplink channel includes a PUCCH or a PUSCH, the SRS is the first-type SRS, and the first uplink signal includes a second-type SRS.

According to a fifth aspect, an embodiment of this application provides a communication apparatus. The communication apparatus may be a device or an apparatus with a chip, a device or an apparatus integrated with a circuit, or a chip, a chip system, a module, or a control unit in the device or the apparatus described above. This is not specifically limited in this application. It should be noted that, in this application, the communication apparatus may be the communication apparatus, or may be a chip, a functional module, an integrated circuit, or the like that is in the communication apparatus and that completes the method provided in this application. This is not specifically limited in this application. The apparatus is configured to perform the method provided in any one of the first aspect to the fourth aspect. Specifically, the apparatus may include a unit and/or a module configured to perform the method provided in any one of the first aspect to the fourth aspect or the implementations of the first aspect to the fourth aspect, for example, a processing unit and a transceiver unit.

In some implementations, the processing unit may be at least one processor. The transceiver unit may be a transceiver or an input/output interface. Optionally, the transceiver may be a transceiver circuit. Optionally, the input/output interface may be an input/output circuit.

In some implementations, the communication apparatus is a chip, a chip system, or a circuit in a transmitter device. The transceiver module may be an input/output interface, an interface circuit, an output circuit, an input circuit, a pin, a related circuit, or the like on the chip, the chip system, or the circuit. The processing unit may be at least one processor, processing circuit, logic circuit, or the like.

According to a sixth aspect, an embodiment of this application provides a processor, configured to perform the methods provided in the foregoing aspects. Unless otherwise specified, or if operations such as sending and receiving related to the processor do not conflict with actual functions or an internal logic of the operations in related descriptions, the operations may be understood as operations such as output, receiving, and input of the processor, or may be understood as operations such as sending and receiving performed by a radio frequency circuit and an antenna. This is not limited in this application.

According to a seventh aspect, an embodiment of this application provides a computer-readable storage medium. The computer-readable storage medium stores instructions or program code. When the instructions or the program code are executed by a processor, the method provided in any implementation of the first aspect to the fourth aspect may be implemented.

According to an eighth aspect, an embodiment of this application provides a computer program product including instructions. When the computer program product runs on a computer, the computer is caused to perform the method provided in any implementation of the first aspect to the fourth aspect.

According to a ninth aspect, an embodiment of this application provides a chip. The chip includes a processor and a communication interface. The processor reads, through the communication interface, instructions stored in a memory, to perform the method provided in any implementation of the first aspect to the fourth aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method provided in any implementation of the first aspect to the fourth aspect.

For specific beneficial effects brought by the third aspect to the seventh aspect, refer to the descriptions of the beneficial effects in the first aspect or the second aspect. Details are not described herein again.

### BRIEF DESCRIPTION OF DRAWINGS

FIG. 1 is a diagram of a communication system to which an embodiment of this application is applied;
FIG. 2 is a diagram of another communication system to which an embodiment of this application is applied;
FIG. 3 is a schematic flowchart of an uplink transmission method according to an embodiment of this application;
FIG. 4 is a diagram of an application scenario of an uplink transmission method according to an embodiment of this application;
FIG. 5 is a diagram of another application scenario of an uplink transmission method according to an embodiment of this application;
FIG. 6 is another schematic flowchart of an uplink transmission method according to an embodiment of this application;
FIG. 7 is a diagram of still another application scenario of an uplink transmission method according to an embodiment of this application;
FIG. 8 is a diagram of still another application scenario of an uplink transmission method according to an embodiment of this application;
FIG. 9 is a diagram of still another application scenario of an uplink transmission method according to an embodiment of this application;
FIG. 10 is a diagram of still another application scenario of an uplink transmission method according to an embodiment of this application;
FIG. 11a and FIG. 11b are diagrams of still other application scenarios of an uplink transmission method according to an embodiment of this application;
FIG. 12 is a diagram of a communication apparatus according to an embodiment of this application;
FIG. 13 is another diagram of a communication apparatus according to an embodiment of this application; and
FIG. 14 is a diagram of a chip system according to an embodiment of this application.

### DESCRIPTION OF EMBODIMENTS

The following describes technical solutions of this application with reference to accompanying drawings.

The technical solutions provided in this application may be applied to various communication systems, such as a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation (6th generation, 6G) mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), or an internet of things (internet of things, IoT) communication system. The technical solutions provided in this application may be further applied to a non-terrestrial network (non-terrestrial network, NTN) system, for example, inter-satellite communication and satellite communication.

For example, a satellite communication system includes a satellite base station and a terminal device. The satellite base station provides a communication service for the terminal device. The satellite base station may also communicate with a base station. A satellite may be used as a base station, or may be used as a terminal device. The satellite may be an uncrewed aerial vehicle, a hot air balloon, a low-earth orbit satellite, a medium-earth orbit satellite, a high-earth orbit satellite, or the like. Alternatively, the satellite may be a non-terrestrial base station, a non-terrestrial device, or the like.

In an example, the V2X communication may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, and vehicle-to-network (vehicle-to-network, V2N) communication.

A device in a communication system may send a signal to another device or receive a signal from another device. The signal may include information, signaling, data, or the like. The device may alternatively be replaced with an entity, a network entity, a communication device, a communication module, a node, a communication node, or the like. In this application, the device is used as an example for description.

The terminal device in embodiments of this application may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data for a user, for example, a handheld device or a vehicle-mounted device with a wireless connection function. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device, another processing device connected to a wireless modem, a wearable apparatus, a terminal device in a 5G network, a terminal device in a future evolved public land mobile network (public land mobile network, PLMN), or the like. This is not limited in embodiments of this application.

By way of example, and not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as a smart watch or smart glasses, and devices that are dedicated to only one type of application function and need to work with other devices such as a smartphone, for example, various smart bands or smart jewelry for monitoring physical signs.

In embodiments of this application, an apparatus configured to implement a function of the terminal device may be the terminal device, or may be an apparatus that can support the terminal device in implementing the function, for example, a chip system or a chip. The apparatus may be installed in the terminal device. In embodiments of this application, the chip system may include a chip, or may include a chip and another discrete component.

A network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover the following various names in a broad sense, or may be replaced with the following names, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary station, a secondary station, a multistandard radio (motor slide retainer, MSR) node, a home base station, a network controller, an access node, a wireless node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), or a positioning node. The base station may be a macro base station, a micro base station, a relay node, a donor node, or the like, or a combination thereof. The base station may alternatively be a communication module, a modem, or a chip disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks of a same access technology or different access technologies. A specific technology and a specific device form that are used for the network device are not limited in embodiments of this application.

The base station may be fixed or mobile. For example, a helicopter or an uncrewed aerial vehicle may be configured as a mobile base station, and one or more cells may move based on a position of the mobile base station. In another example, the helicopter or the uncrewed aerial vehicle may be configured as a device for communicating with another base station.

In some deployments, the network device mentioned in embodiments of this application may be a device including a CU or a DU, a device including a CU and a DU, or a device including a CU-control plane (central unit-control plane (central unit-control plane, CU-CP)) node, a CU-user plane (central unit-user plane (central unit-user plane, CU-UP)) node, and a DU node.

The network device provides a service for a cell, and the terminal device uses a transmission resource (for example, a frequency domain resource, or a spectrum resource) allocated by the network device to communicate with the cell. The cell may belong to a macro base station (for example, a macro eNB or a macro gNB), or may belong to a base station corresponding to a small cell (small cell). The small cell herein may include: a metro cell (metro cell), a micro cell (micro cell), a pico cell (pico cell), a femto cell (femto cell), and the like. These small cells feature small coverage and low transmit power, and are applicable to providing a high-speed data transmission service. The foregoing cell may be understood as an area within coverage of a radio signal of the network device.

The network device and the terminal device may be deployed on land, including indoors or outdoors, or in a handheld manner or a vehicle-mounted manner; may be deployed on the water; or may be deployed on an airplane, a balloon, and a satellite in the air. A scenario of the network device and the terminal device is not limited in embodiments of this application.

In descriptions of embodiments of this application, unless otherwise specified, "/" means "or". For example, A/B may indicate A or B. In this specification, "and/or" describes an association relationship between associated objects and indicates that three relationships may exist. For example, A and/or B may indicate the following three cases: Only A exists, both A and B exist, and only B exists. In this application, "at least one" means one or more, and "a plurality of" means two or more. "At least one item (piece) of the following" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

Prefix words "first", "second", and the like in embodiments of this application are merely intended to distinguish between different objects, and impose no limitation on positions, sequences, priorities, quantities, content, or the like of the described objects. In embodiments of this application, use of the prefix words, for example, ordinal numbers, used to distinguish between the described objects does not constitute a limitation on the described objects. For descriptions of the described objects, refer to the descriptions of the context in the claims or embodiments. The use of such prefix words should not constitute a redundant limitation.

For ease of understanding the technical solutions of this application, the following explains and describes some terms in this application.

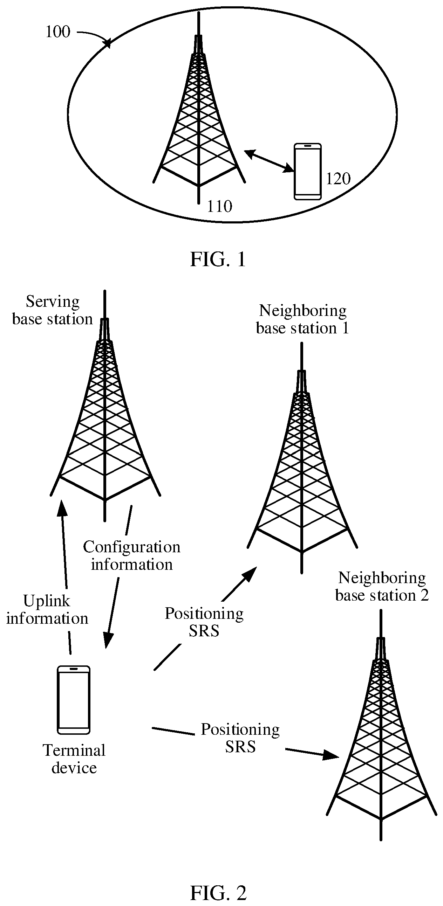

FIG. 1 is a diagram of a communication system 100 to which an embodiment of this application is applied. As shown in FIG. 1, the wireless communication system 100 may include at least one network device, for example, a network device 110 shown in FIG. 1. The wireless communication system 100 may further include at least one terminal device, for example, a terminal device 120 shown in FIG. 1. For example, the network device and the terminal device each may be equipped with a plurality of antennas, and the network device and the terminal device may communicate with each other by using a multi-antenna technology.

It should be understood that FIG. 1 is merely an example simplified diagram for ease of understanding. The wireless communication system 100 may further include another network device or another terminal device that is not shown in FIG. 1.

Positioning is an important function in the mobile communication system, and requires the system to provide position information of a user in real time. A 5G communication system has a high-accuracy positioning requirement on the positioning, and requires an outdoor positioning error to be less than 10 meters and an indoor positioning error to be less than 1 meter. A positioning technology may include uplink positioning, downlink positioning, and uplink and downlink positioning. In the uplink positioning, the network device measures an SRS signal sent by the terminal device. In an actual positioning scenario, the network device may include a serving base station, and may further include a neighboring base station. The serving base station is a base station in a cell of a to-be-positioned terminal device, and the serving base station may provide a communication connection service for the to-be-positioned terminal device. There may be at least two neighboring base stations. The neighboring base station may be a base station of the cell of the to-be-positioned terminal device, the neighboring base station may be a base station of another cell, or a part of the neighboring base stations may be a base station of the cell of the to-be-positioned terminal device and a part of the neighboring base stations may be a base station of another cell.

FIG. 2 is a diagram of a positioning scenario. As shown in FIG. 2, a serving base station may send configuration information to a terminal device. The configuration information may include SRS resource information, and the SRS resource information indicates a time-frequency resource position occupied by one SRS resource. A configured time domain type of an SRS resource includes periodic, semi-persistent, and aperiodic. Configuration information of a periodic SRS resource includes a periodicity (for example, 2 ms, 5 ms, or 10 ms) and an offset parameter. After the serving base station configures an SRS resource for the terminal device, the terminal device sends, based on the configuration information, an SRS on the determined SRS resource in a slot (slot) of a specific periodicity. Configuration information of an aperiodic SRS resource does not include a periodicity, but includes only a time-domain offset K from downlink control information (downlink control information, DCI) that triggers an SRS. When the terminal device receives DCI signaling at an M^{th} moment and the signaling indicates to trigger the SRS, the terminal device sends the SRS on a corresponding SRS resource at an (M+K)^{th} moment, where K and M are positive integers. The SRS may support transmission in a frequency hopping manner, and a specific frequency hopping characteristic may be jointly determined based on parameters in time domain and frequency domain.

In a specific implementation, when the SRS needs to be sent in the frequency hopping manner, the SRS resource information may indicate the following content: a position of a start physical resource block (physical resource block, PRB), in frequency domain, of a resource required for sending the SRS through frequency hopping for the 1st time in time domain, a bandwidth occupied for each time of SRS transmission performed through frequency hopping, a quantity of overlapping resources (for example, a quantity of overlapping PRBs) in frequency domain resources required for two consecutive hops of SRSs, a start slot offset and a start symbol corresponding to time domain resources occupied for each time of SRS transmission performed through frequency hopping, and a quantity of consecutive symbols required for each time of SRS transmission performed through frequency hopping. Based on the SRS resource information, the terminal device may determine a unique frequency hopping pattern, that is, a time-frequency resource required for sending each hop of SRS through frequency hopping. The frequency hopping pattern may be configured for a periodic SRS, a semi-persistent SRS, or an aperiodic SRS. Frequency hopping corresponding to each frequency hopping pattern may be completed in one or more slots. Further, the terminal device may send, based on the frequency hopping pattern, an SRS used for positioning (referred to as a positioning SRS below). For example, the terminal device may send the positioning SRS to the serving base station, and the terminal device may further send the positioning SRS to a neighboring base station 1 and/or a neighboring base station 2. After receiving the positioning SRS, the serving base station and/or the neighboring base station measure/measures time of arrival of the SRS, to determine a position of a to-be-positioned terminal device based on a time of arrival (time of arrival, TOA) positioning technology, an angle of arrival (angle of arrival, UL-AOA) positioning technology, or the like.

As described above, when a network device configures or schedules the terminal to send the positioning SRS in the frequency hopping manner, the network device may still schedule or configure the terminal device to send an uplink signal or an uplink channel. Consequently, a resource for sending the positioning SRS by the terminal device and a resource for sending the uplink signal or the uplink channel overlap in time domain, or time required for the terminal device to switch from a resource position for sending a previous-hop SRS to a resource position for sending another uplink signal or channel and perform the transmission, to a resource position for a current-hop SRS, exceeds a configured time interval between two consecutive hops of SRSs. As a result, a time domain resource conflict occurs.

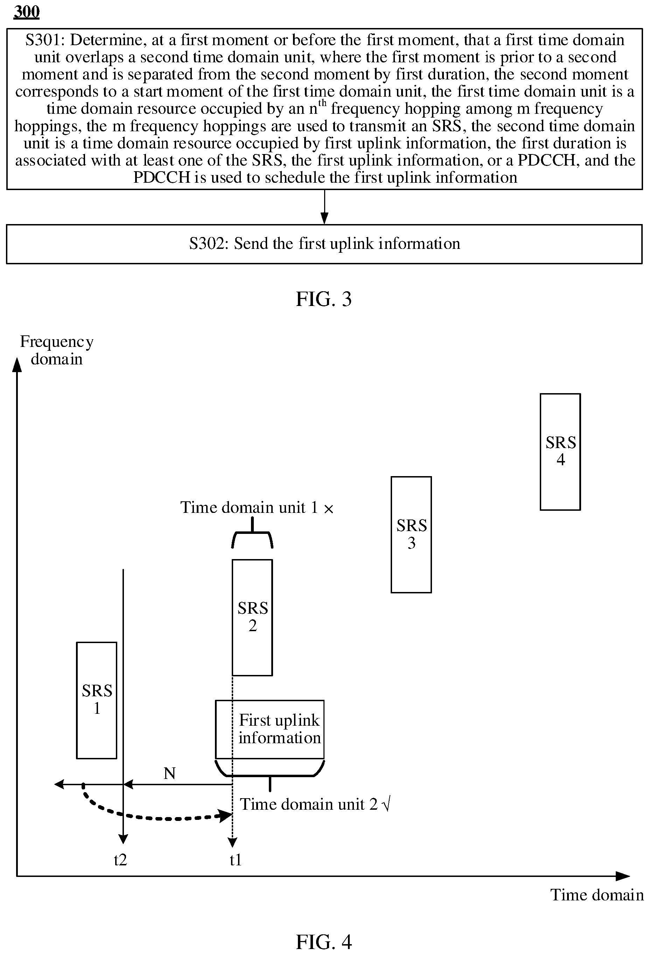

FIG. 3 is an example flowchart of an uplink transmission method according to an embodiment of this application. The method 300 shown in FIG. 3 can resolve a conflict between a time domain resource required for sending an SRS in a frequency hopping manner and a time domain resource required for an uplink channel or signal. For ease of description, an example in which the method 300 is performed by a terminal device is used below for description. It may be understood that the method 300 may alternatively be performed by a component of the terminal device, for example, a chip, a chip system, or a circuit. This is not limited. The steps described below as being performed by a single execution body may alternatively be performed by a plurality of execution bodies. These execution bodies may be logically and/or physically separated. The method 300 shown in FIG. 3 may include the following steps.

S301: Determine, at a first moment or before the first moment, that a first time domain unit overlaps a second time domain unit, where the first moment is prior to a second moment and is separated from the second moment by first duration, the second moment corresponds to a start moment of the first time domain unit, the first time domain unit is a time domain resource occupied by an n^{th} frequency hopping among m frequency hoppings, the m frequency hoppings are used to transmit an SRS, the second time domain unit is a time domain resource occupied by first uplink information, the first duration is associated with at least one of the SRS, the first uplink information, or a PDCCH, and the PDCCH is used to schedule the first uplink information.

For example, the SRS may include the foregoing positioning SRS, and the SRS sent through frequency hopping is referred to as a first-type SRS below. A method for sending the first-type SRS in time domain may be periodic, semi-persistent, or aperiodic. This is not specifically limited in this application. Both m and n are positive integers, and m is greater than or equal to n.

In some implementations, before S301 is performed, the method further includes: The terminal device receives first-type SRS resource configuration information, and determines, based on the first-type SRS resource configuration information, the first time domain unit and the second moment that correspond to the n^{th} frequency hopping for sending the first-type SRS. For example, for content indicated by the first-type SRS resource configuration information, refer to the descriptions in the foregoing embodiments. Details are not described herein again. The first-type SRS resource configuration information may include the SRS resource information in the foregoing embodiments.

In some implementations, before S301 is performed, the method further includes: The terminal device receives the PDCCH, and determines, based on downlink control information (downlink control information, DCI) carried on the PDCCH, the second time domain unit corresponding to sending of the first uplink information.

In some implementations, before S301 is performed, the method further includes: The terminal device receives configuration information, where the configuration information includes a time-frequency resource used to send the first uplink information, and determines, based on the configuration information, the second time domain unit corresponding to sending of the first uplink information.

S302: Send the first uplink information.

The following describes S301 and S302 in detail with reference to FIG. 4. In FIG. 4, an example in which a time domain unit 1 is the first time domain unit and a time domain unit 2 is the second time domain unit is used. A moment t1 may be understood as the second moment determined based on the first-type SRS resource configuration information, a moment t2 may be understood as the first moment, duration between the moment t1 and the moment t2 is the first duration, and the first duration may include N symbols. For example, the first duration and/or the N symbols may be determined based on a capability of the terminal device. Specifically, as shown in FIG. 4, at the moment t2 or before the moment t2, if it is determined that the time domain unit 1 and the time domain unit 2 overlap, the first uplink information is sent on the time domain unit 2, and the first-type SRS is not sent.

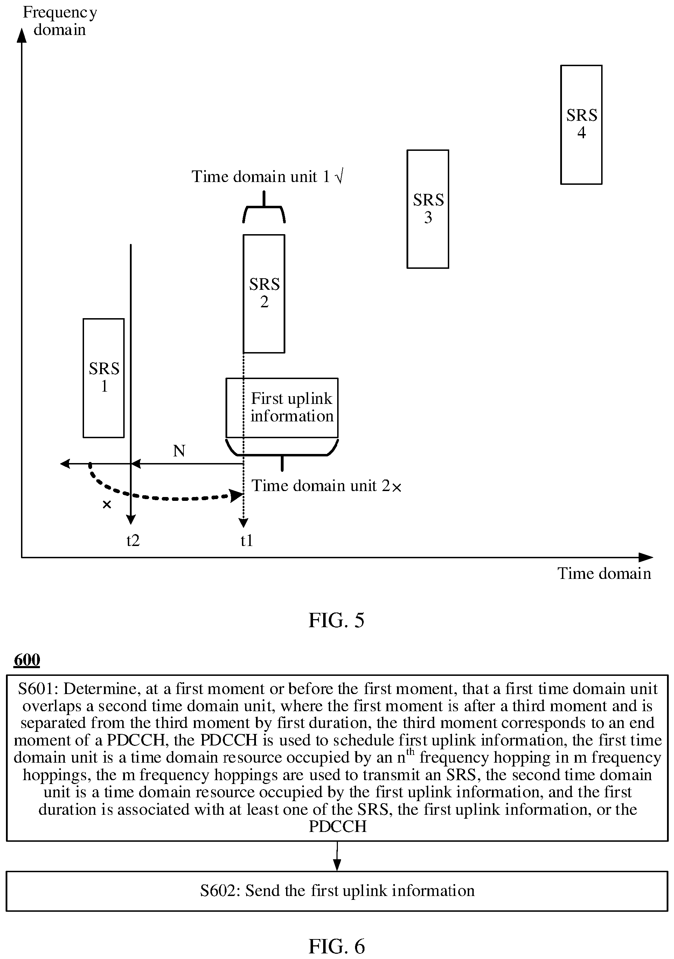

In some implementations, as shown in FIG. 5, at the moment t2 or before the moment t2, if the terminal device has not determined that the time domain unit 1 and the time domain unit 2 overlap, the first-type SRS is sent via the time domain unit 1, and the first uplink information is not sent.

In some implementations, the terminal device determines the first moment based on the first duration and the second moment. That the first duration is associated with at least one of the first-type SRS, the first uplink information, or the PDCCH includes: The first duration is associated with a first subcarrier spacing, and the first subcarrier spacing is associated with at least one of the first-type SRS, the first uplink information, or the physical downlink control channel PDCCH. Alternatively, the first duration is determined based on the capability of the terminal device. The capability of the terminal device is associated with at least one of the first-type SRS, the first uplink information, or the PDCCH. For example, the capability of the terminal device is associated with the first subcarrier spacing, and the first subcarrier spacing is associated with at least one of the first-type SRS, the first uplink information, or the physical downlink control channel PDCCH.

That the first subcarrier spacing is associated with at least one of the first-type SRS, the first uplink information, or the physical downlink control channel PDCCH may include: The first subcarrier spacing is a subcarrier spacing for sending the first-type SRS, a subcarrier spacing for sending the first uplink information, or a subcarrier spacing for receiving the PDCCH; the first subcarrier spacing is a smallest subcarrier spacing among a subcarrier spacing for sending the first-type SRS, a subcarrier spacing for sending the first uplink information, and a subcarrier spacing for receiving the PDCCH; the first subcarrier spacing is a smallest subcarrier spacing among a subcarrier spacing for sending the first uplink information and a subcarrier spacing for sending the first-type SRS; the first subcarrier spacing is a smallest subcarrier spacing among a subcarrier spacing for sending the first uplink information and a subcarrier spacing for receiving the PDCCH; or the first subcarrier spacing is a smallest subcarrier spacing among a subcarrier spacing for sending the first-type SRS and a subcarrier spacing for receiving the PDCCH.

In some implementations, a value of the first duration and/or a value of N are/is related to the capability of the terminal device. For example, if the capability of the terminal device is a processing capability 1, a relationship between a value of the first subcarrier spacing and the value of N may be shown in Table 1; if the capability of the terminal device is a processing capability 2, a relationship between a value of the first subcarrier spacing and the value of N may be shown in Table 2. The processing capability 1 and the processing capability 2 are defined in the communication protocol 3GPP TS 38.214, and details are not described herein. In Table 1 and Table 2, *µ* represents a subcarrier spacing type, and Δ*f* represents a subcarrier spacing.

**Table 1**

| *µ* | Δ*f* = 2*^{µ}* ·15 [kHz] | **N** |
|---|---|---|
| 0 | 15 | 10 |
| 1 | 30 | 12 |
| 2 | 60 | 23 |
| 3 | 120 | 36 |
| 5 | 480 | 144 |
| 6 | 960 | 288 |

**Table 2**

| *µ* | Δ*f* = 2*^{µ}* ·15 [kHz] | **N** |
|---|---|---|
| 0 | 15 | 5 |
| 1 | 30 | 5.5 |
| 2 | 60 | 11 (for a frequency range 1) |

The frequency range 1 refers to a low frequency band, namely, a frequency range from 410 MHz to 7125 MHz.

For example, if the capability of the terminal device is the processing capability 1, and a determined first subcarrier spacing is 120 kHz, the first duration may be duration corresponding to 36 symbols in a case of the subcarrier spacing being 120 kHz, that is, 0.125/14×36≈0.32 ms. For another example, if the capability of the terminal device is the processing capability 2, and a determined first subcarrier spacing is 30 kHz, the first duration may be duration corresponding to 5.5 symbols in a case of the subcarrier spacing being 30 kHz, that is, 0.5/14×5.5≈0.20 ms.

In some implementations, the first duration may be determined based on a second subcarrier spacing, and a value of the second subcarrier spacing is less than or equal to a preset threshold. For example, the preset threshold may be 30 kHz or 60 kHz. Alternatively, the preset threshold may be related to the capability of the terminal device. For example, a preset threshold corresponding to the processing capability 1 may be 120 kHz, and a preset threshold corresponding to the processing capability 2 may be 60 kHz.

It should be noted that in specific implementation, the first subcarrier spacing or the second subcarrier spacing may be as small as possible, so that determined first duration is as large as possible.

In some implementations, the first uplink information includes a first uplink channel and/or a first uplink signal, the first uplink channel includes a PUCCH or a PUSCH, and the first uplink signal includes a second-type SRS. The second-type SRS may be understood as an SRS other than the SRS sent in the frequency hopping manner. For example, the second-type SRS may be an SRS used for beam management, an SRS used for codebook-based or non-codebook-based downlink transmission, an SRS used for antenna switching, or an SRS that is used for positioning and that is sent not in the frequency hopping manner.

In the uplink transmission method provided in this embodiment of this application, the first moment is determined based on a start moment at which the terminal device sends each hop of SRS. Before the first moment, if the terminal device can determine that a time domain resource for the first uplink information conflicts with a time domain resource for the first-type SRS, the terminal device sends the first uplink information and does not send the first-type SRS. This helps resolve a problem of a conflict between an SRS resource and another uplink information resource in a process of sending the SRS through frequency hopping.

FIG. 6 is an example flowchart of an uplink transmission method according to an embodiment of this application. The method 600 shown in FIG. 6 can resolve a conflict between a time domain resource required for sending an SRS in a frequency hopping manner and a time domain resource required for an uplink channel or signal. For ease of description, an example in which the method 600 is performed by a terminal device is used below for description. It may be understood that the method 600 may alternatively be performed by a component of the terminal device, for example, a chip, a chip system, or a circuit. This is not limited. The steps described below as being performed by a single execution body may alternatively be performed by a plurality of execution bodies. These execution bodies may be logically and/or physically separated. The method 600 shown in FIG. 6 may include the following steps.

S601: Determine, at a first moment or before the first moment, that a first time domain unit overlaps a second time domain unit, where the first moment is after a third moment and is separated from the third moment by first duration, the third moment corresponds to an end moment of a physical downlink control channel PDCCH, the PDCCH is used to schedule first uplink information, the first time domain unit is a time domain resource occupied by an n^{th} frequency hopping among m frequency hoppings, the m frequency hoppings are used to transmit an SRS, the second time domain unit is a time domain resource occupied by the first uplink information, and the first duration is associated with at least one of the SRS, the first uplink information, or the PDCCH.

For the SRS, a method for determining the first time domain unit, and a method for determining the second time domain unit, refer to the descriptions in the method 300. Details are not described herein again.

S602: Send the first uplink information.

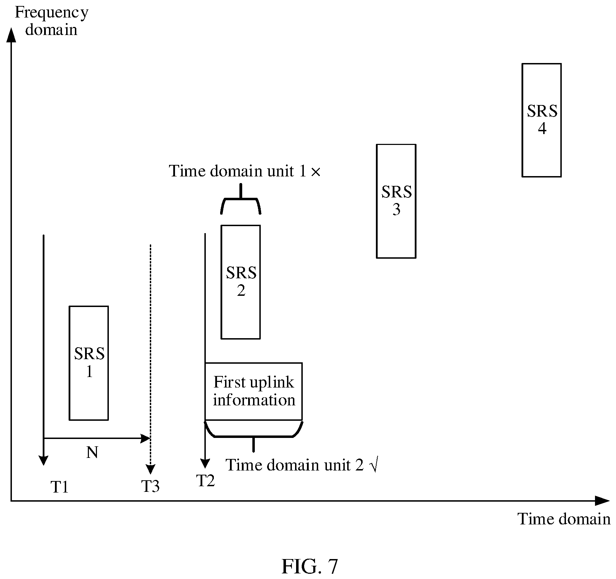

The following describes S601 and S602 in detail with reference to FIG. 7. In FIG. 7, an example in which a time domain unit 1 is the first time domain unit and a time domain unit 2 is the second time domain unit is used. A moment T1 may be understood as the third moment determined based on the PDCCH, a moment T3 may be understood as the first moment, duration between the moment T1 and the moment T3 is the first duration, the first duration may include N symbols, and a moment T2 is a start moment for sending the second time domain unit. Specifically, as shown in FIG. 7, at the moment T3 or before the moment T3, if it is determined that the time domain unit 1 and the time domain unit 2 overlap, the first uplink information is sent on the time domain unit 2, and the first-type SRS is not sent.

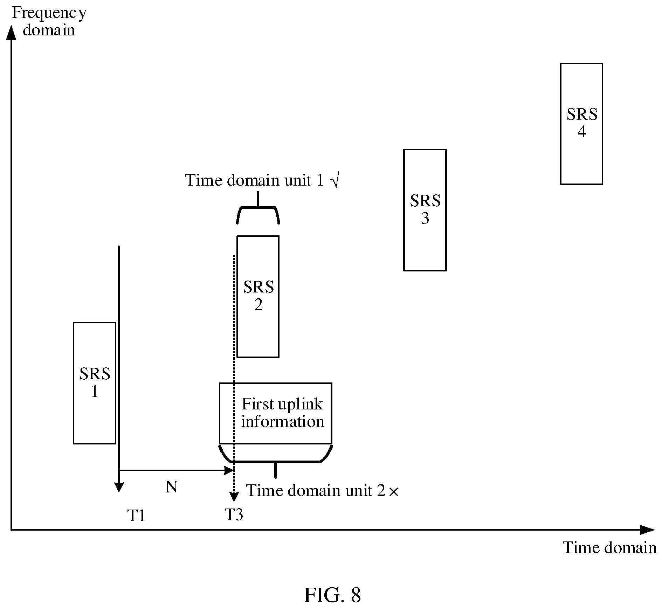

In some implementations, as shown in FIG. 8, at the moment T3 or before the moment T3, if the terminal device does not determine that the time domain unit 1 and the time domain unit 2 overlap, the terminal device sends the first-type SRS on the time domain unit 1, and does not send the first uplink information.

In some implementations, the terminal device determines the first moment based on the first duration and the third moment. For a manner of determining the first duration, refer to the descriptions in the method 300. Details are not described herein again.

In the uplink transmission method provided in this embodiment of this application, the first moment is determined based on an end moment at which the terminal device receives the PDCCH. Before the first moment, if the terminal device can determine that a time domain resource for the first uplink information conflicts with a time domain resource for the first-type SRS, the terminal device sends the first uplink information and does not send the first-type SRS. This helps resolve a problem of a conflict between an SRS resource and another uplink information resource in a process of sending the SRS through frequency hopping.

In this embodiment of this application, the first moment may also be understood as a moment corresponding to a first symbol, the second moment corresponds to a start symbol of the first time domain unit, the third moment corresponds to the end symbol of the PDCCH, and the start symbol of the first time domain unit is separated from the first symbol by N symbols, or the end symbol of the PDCCH is separated from the first symbol by N symbols.

It should be noted that a relationship between the start symbol of the first time domain unit and a start symbol of the second time domain unit is not specifically limited in embodiments of this application. For example, as shown in FIG. 4, FIG. 5, FIG. 7, and FIG. 8, the start symbol of the second time domain unit may be located before the start symbol of the first time domain unit. Alternatively, the start symbol of the second time domain unit may overlap the start symbol of the first time domain unit. Alternatively, the start symbol of the second time domain unit may be located after the start symbol of the first time domain unit. In specific implementation, regardless of a sequence relationship between the start symbol of the first time domain unit and the start symbol of the second time domain unit, provided that the terminal device can determine, at the first moment or before the first moment, that the first time domain unit overlaps the second time domain unit, the terminal device has sufficient time to prepare for sending the first uplink information.

In some implementations, the start symbol of the second time domain unit is located after the start symbol of the first time domain unit, or an end symbol of the second time domain unit is located before an end symbol of the first time domain unit. In other words, the first time domain unit may be divided into two parts, where one part overlaps the second time domain unit, and the other part does not overlap the second time domain unit. The part that does not overlap the second time domain unit is referred to as a third time domain unit below. Before or after performing S302 or S602, the terminal device may further send the first-type SRS on the third time domain unit.

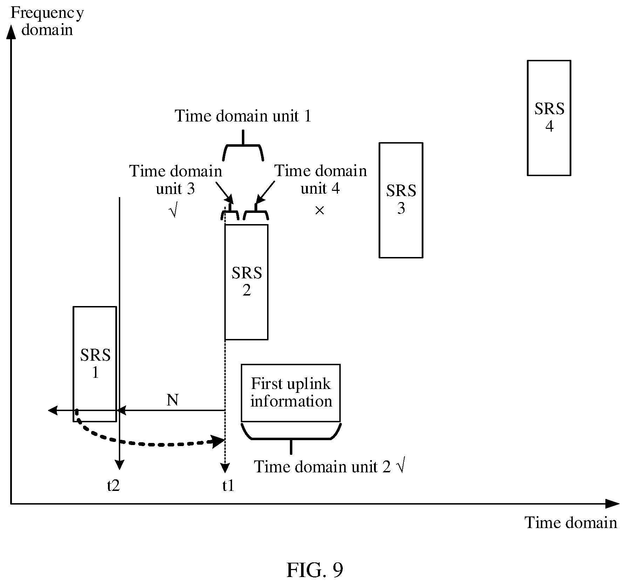

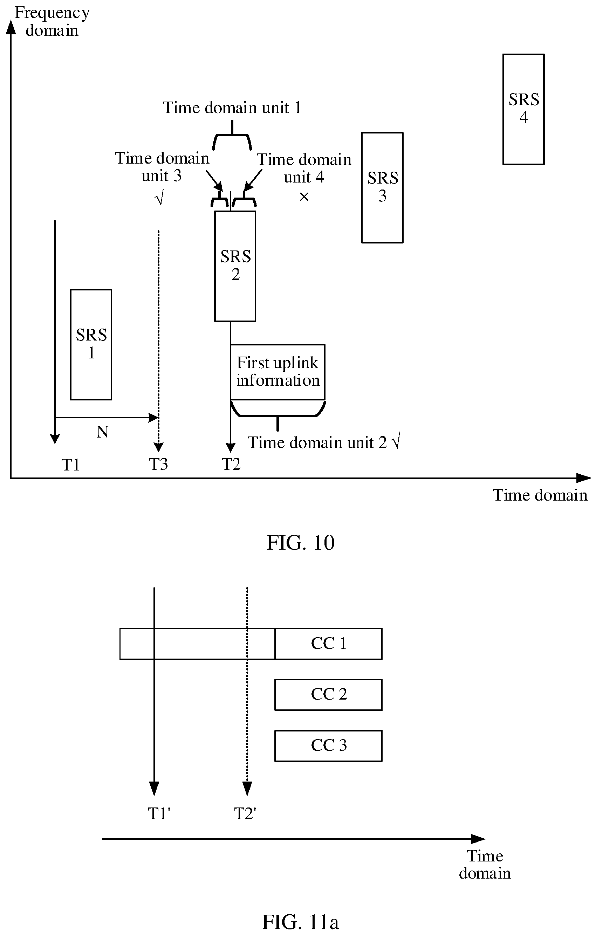

For example, as shown in FIG. 9 and FIG. 10, a time domain unit 3 may be considered as an example of the third time domain unit. When it is determined, before the moment t2 or the moment T3, that the time domain unit 1 overlaps the time domain unit 2, the first-type SRS is sent on the time domain unit 3, and the first uplink information is sent on the time domain unit 2.

Generally, a network device may configure one or more BWPs for the terminal device. The BWP may include consecutive PRBs in frequency domain, and the BWP is a subset of a bandwidth of the terminal device. A minimum granularity of the BWP in frequency domain is one PRB, and one or more bandwidth parts may overlap in frequency domain. In a single-carrier scenario, one terminal device may have only one active BWP (active BWP) at one moment, and the terminal device receives data/reference signals or sends data/reference signals on the active BWP. In some implementations, a BWP used by the terminal device to send the first uplink information, a BWP used by the terminal device to receive the PDCCH, and a BWP or frequency domain position used by the terminal device to send the first-type SRS may all be different. Therefore, specific switching duration is required for the terminal device to switch from the BWP for receiving the PDCCH to the BWP or frequency domain position for sending the first-type SRS, or specific switching duration is required for the terminal device to switch from the BWP for receiving the PDCCH, or the BWP or frequency domain position for sending the first-type SRS to the BWP for sending the first uplink information.

Therefore, the first duration determined in the foregoing embodiments may include first sub-duration and second sub-duration. The first sub-duration is determined based on the first subcarrier spacing, and the second sub-duration is determined based on duration required for BWP switching. In other words, the duration (or a quantity of symbols) between t2 and t1 in FIG. 4, FIG. 5, and FIG. 9, or the duration (or a quantity of symbols) between T1 and T3 in FIG. 7, FIG. 8, and FIG. 10 includes the duration (or a quantity of symbols) determined based on the first carrier spacing and the duration (or a quantity of symbols) determined based on BWP or frequency domain position switching.

For example, the BWP switching may include any one of the following: switching from the BWP or frequency domain position for sending the first-type SRS to the BWP for sending the first uplink information, switching from the BWP for receiving the PDCCH to the BWP for sending the first uplink information, and switching from the BWP for receiving the PDCCH to the BWP or frequency domain position for sending the first-type SRS. That the second sub-duration is determined based on the duration required for the BWP or frequency domain position switching may be understood as follows: The second sub-duration is duration required for actual BWP or frequency domain position switching, or the second sub-duration may be longest duration required in the foregoing three BWP or frequency domain position switching scenarios.

In the foregoing embodiments, the duration required for the BWP or frequency domain position switching is considered when the first duration is determined. In this way, when a time domain resource conflict occurs, the terminal device can have sufficient time to perform BWP or frequency domain position switching.

Considering the duration required for the BWP or frequency domain position switching, with reference to the scenarios shown in FIG. 9 and FIG. 10, when sending the first-type SRS on the third time domain unit and sending the first uplink information on the second time domain unit, the terminal device may send the first-type SRS only in a part of symbols in the third time domain unit. For example, the third time domain unit includes three symbols, and switching from the BWP or frequency domain position for sending the first-type SRS to the BWP for sending the first uplink information needs to occupy duration corresponding to one symbol. In this case, the terminal device sends the first-type SRS on first two symbols in the third time domain unit, and then performs BWP or frequency domain position switching. After completing the BWP or frequency domain position switching, the terminal device sends the first uplink information on the second time domain unit.

The foregoing describes, with reference to FIG. 3 to FIG. 10, a solution to a resource conflict between a positioning SRS and other uplink information when the terminal device sends the positioning SRS in a frequency hopping manner on a component carrier (component carrier, CC). In actual implementation, the network device may send configuration information to the terminal device. The configuration information includes information about a plurality of carriers for sending the positioning SRS, and information about a time-frequency resource required for sending the positioning SRS on each carrier, so that the terminal device simultaneously sends the positioning SRS on a plurality of CCs. After the terminal device is configured to simultaneously send the positioning SRS on the plurality of CCs, the terminal device may be further scheduled or configured to send the first uplink information in an initial BWP or an active BWP. The initial BWP or the active BWP may be one of the plurality of CCs used to send the SRS, or the initial BWP or the active BWP may not be any CC. In this case, the terminal device may resolve a time domain resource conflict between the first uplink information and the positioning SRS according to the solution in the method 300 or the method 600.

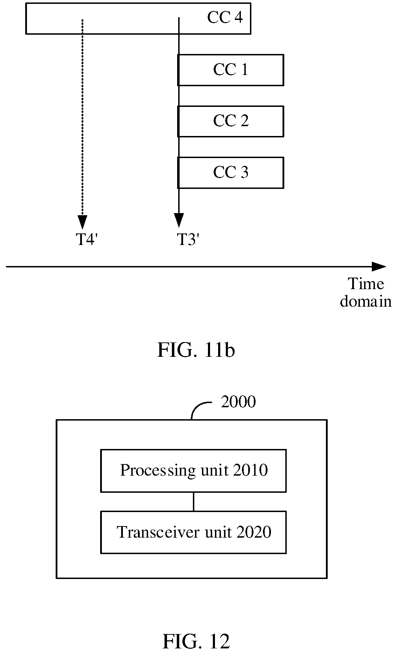

For example, as shown in FIG. 11a, a terminal device is configured or scheduled to simultaneously send a positioning SRS on a CC 1 to a CC 3, and the terminal device receives a PDCCH before a moment T1'. The PDCCH is used to schedule the terminal device to send first uplink information in an active BWP that overlaps the CC 1, and the moment T1' is an end moment of the PDCCH. If the terminal device determines, before a moment T2', that there is a time domain resource conflict between the first uplink information and the positioning SRS, the terminal device sends the first uplink information in the active BWP, and no longer sends the positioning SRS on a plurality of CCs. If the terminal device does not determine, before a moment T2', that there is a time domain resource conflict between the first uplink information and the positioning SRS, the terminal device sends the positioning SRS on a plurality of CCs. Alternatively, as shown in FIG. 11b, the terminal device is configured or scheduled to simultaneously send a positioning SRS on a CC1 to a CC3 at a moment T3', and the terminal device is scheduled or configured to send the first uplink information by using an initial BWP or an active BWP on a CC4. If the terminal device determines, before a moment T4', that there is a time domain resource conflict between the first uplink information and the positioning SRS, the terminal device sends the first uplink information in the initial BWP or the active BWP, and no longer sends the positioning SRS on a plurality of CCs. If the terminal device does not determine, before a moment T4', that there is a time domain resource conflict between the first uplink information and the positioning SRS, the terminal device sends the positioning SRS on a plurality of CCs.

Duration between T1' and T2' (or between T3' and T4') may include N symbols, and the N symbols are determined based on a third subcarrier spacing. The third subcarrier spacing may be a subcarrier spacing with a smallest value in subcarrier spacings of all CCs, or the third subcarrier spacing may be as small as possible, so that determined duration between T1' and T2' (or between T3' and T4') is as long as possible. More specifically, the third subcarrier spacing may be related to a capability of the terminal device. For example, when the capability of the terminal device is a processing capability 1, for a relationship between a value of the third subcarrier spacing and a value of N, refer to Table 1. When the capability of the terminal device is a processing capability 2, for a relationship between a value of the third subcarrier spacing and a value of N, refer to Table 2.

The uplink transmission method provided in embodiments of this application is described above with reference to FIG. 1 to FIG. 11a and FIG. 11b. In embodiments of this application, unless otherwise specified or there is a logic conflict, terms and/or descriptions in embodiments are consistent and may be mutually referenced, and technical features in different embodiments may be combined based on an internal logical relationship thereof to form a new embodiment.

The following describes in detail a communication apparatus provided in embodiments of this application with reference to FIG. 12 to FIG. 14. It should be understood that descriptions of apparatus embodiments correspond to the descriptions of the method embodiments. Therefore, for content that is not described in detail, refer to the method embodiments above. For brevity, details are not described herein again.

FIG. 12 is a block diagram of a communication apparatus 2000 according to an embodiment of this application. The apparatus 2000 includes a processing unit 2010 (or referred to as a determining module) and a transceiver unit 2020 (or referred to as a transceiver module). The transceiver unit 2020 may be configured to implement a corresponding transceiver function, and the processing unit 2010 may be configured to implement a corresponding processing function.

Optionally, the transceiver unit 2020 may include a sending unit and a receiving unit. The sending unit is configured to perform a sending operation in the foregoing method embodiments. The receiving unit is configured to perform a receiving operation in the foregoing method embodiments.

In some implementations, the apparatus 2000 may include a sending module but does not include a receiving module.

Optionally, the apparatus 2000 further includes a storage unit. The storage unit may be configured to store instructions and/or data. The processing unit 2010 may read the instructions and/or the data in the storage unit, to enable the apparatus to implement related actions performed by a terminal device in the foregoing method embodiments.

The apparatus 2000 may be configured to perform actions performed by the terminal device in the method 300 or the method 600. Specifically, the processing unit 2010 is configured to determine whether a first time domain unit overlaps a second time domain unit. The transceiver unit 2020 is configured to send first uplink information when the processing unit 2010 determines, at a first moment or before the first moment, that the first time domain unit overlaps the second time domain unit.

In some implementations, the transceiver unit 2020 is further configured to: send the first uplink information on the second time domain unit, and send a first-type SRS on a third time domain unit, where the third time domain unit is a part of the first time domain unit other than a part that overlaps the second time domain unit.

It should be understood that a specific process of performing the foregoing corresponding steps by each unit is described in detail in the foregoing method embodiments, for example, a method for determining the first moment, a method for determining the first time domain unit, and a method for determining the second time domain unit. For brevity, details are not described herein again.

It should be understood that the apparatus 2000 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 2000 may be specifically the communication apparatus in the foregoing embodiments, and may be configured to perform procedures and/or steps corresponding to the communication apparatus in the foregoing method embodiments. To avoid repetition, details are not described herein again.

The apparatus 2000 in the foregoing solutions has a function of implementing corresponding steps performed by a communication apparatus (for example, the terminal device) in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, the sending unit in the transceiver unit may be replaced by a transmitter, and the receiving unit in the transceiver unit may be replaced by a receiver), and another unit, for example, the processing unit, may be replaced by a processor, to separately perform sending and receiving operations and related processing operations in the method embodiments.

In addition, the transceiver unit 2020 may alternatively be a transceiver circuit (for example, may include a sending circuit, or may include a receiving circuit), and the processing unit 2010 may be a processing circuit.

It should be noted that the apparatus in FIG. 12 may be the communication device (for example, the terminal device) in the foregoing embodiments, or may be a chip or a chip system, for example, a system-on-a-chip (system-on-a-chip, SoC). The transceiver unit may be an input/output circuit or a communication interface. The processing unit is a processor, a microprocessor, or an integrated circuit integrated on the chip. This is not limited herein.

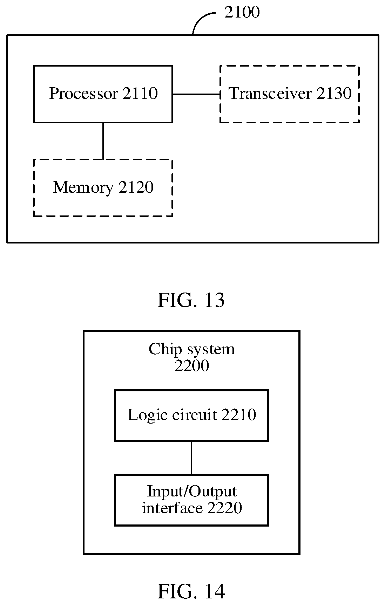

FIG. 13 is a diagram of another communication apparatus 2100 according to an embodiment of this application. The apparatus 2100 includes a processor 2110. The processor 2110 is coupled to a memory 2120. The memory 2120 is configured to store a computer program or instructions and/or data. The processor 2110 is configured to execute the computer program or the instructions stored in the memory 2120, or read the data stored in the memory 2120, to perform the methods in the foregoing method embodiments.

Optionally, there are one or more processors 2110.

Optionally, there are one or more memories 2120.

Optionally, the memory 2120 and the processor 2110 are integrated together or disposed separately.

Optionally, as shown in FIG. 13, the apparatus 2100 further includes a transceiver 2130, and the transceiver 2130 is configured to receive and/or send a signal. For example, the processor 2110 is configured to control the transceiver 2130 to receive and/or send a signal.

In an example, the processor 2110 may have a function of the processing unit 2010 shown in FIG. 12, the memory 2120 may have a function of a storage unit, and the transceiver 2130 may have a function of the transceiver unit 2020 shown in FIG. 12.

In a solution, the apparatus 2100 is configured to implement operations performed by a communication apparatus (for example, a terminal device) in the foregoing method embodiments.

For example, the processor 2110 is configured to execute the computer program or the instructions stored in the memory 2120, to implement related operations of the communication apparatus in the foregoing method embodiments.

In some implementations, for example, the apparatus 2100 is a terminal device, the transceiver 2130 may include a transmitter, a receiver, a radio frequency circuit, an antenna, and an input/output apparatus. The processor 2110 is mainly configured to: process a communication protocol and communication data, control the terminal device, execute a software program, process data of the software program, and the like. The memory 2120 is mainly configured to store the software program and the data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus (for example, a touchscreen, a display, or a keyboard) is mainly configured to: receive data input by a user, and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

In embodiments of this application, the antenna and the radio frequency circuit that have a transceiver function may be considered as a transceiver module of the terminal device, and the processor that has a processing function may be considered as a processing module of the terminal device.

In some implementations, the processor 2110 may also be referred to as a processing unit, a processing board, a processing module, a processing apparatus, or the like. The transceiver 2130 may also be referred to as a transceiver unit, a transceiver machine, a transceiver apparatus, or the like.

When the apparatus 2100 is a chip, the chip includes a processor, a memory, and a transceiver. The transceiver may be an input/output circuit or a communication interface. The processor may be a processing module, a microprocessor, or an integrated circuit integrated on the chip. A sending operation performed by the terminal device in the foregoing method embodiments may be understood as an output of the chip, and a receiving operation performed by the terminal device in the foregoing method embodiments may be understood as an input of the chip.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is the general-purpose processor, the DSP, the ASIC, the FPGA or another programmable logic device, the discrete gate or the transistor logic device, or the discrete hardware component, the memory (storage module) may be integrated into the processor.

It should further be noted that the memory described in this specification is intended to include, but is not limited to, these memories and any other appropriate type of memory.

FIG. 14 is a diagram of a chip system 2200 according to an embodiment of this application. The chip system 2200 (or may be referred to as a processing system) includes a logic circuit 2210 and an input/output interface (input/output interface) 2220.

The logic circuit 2210 may be a processing circuit in the chip system 2200. The logic circuit 2210 may be coupled and connected to a storage unit, and invoke instructions in the storage unit, so that the chip system 2200 can implement the methods and functions in embodiments of this application. The input/output interface 2220 may be an input/output circuit in the chip system 2200, and outputs information processed by the chip system 2200, or inputs to-be-processed data or signaling information to the chip system 2200 for processing.

In a solution, the chip system 2200 is configured to implement operations performed by a communication apparatus (for example, a terminal device) in the foregoing method embodiments.

For example, the logic circuit 2210 is configured to implement a processing-related operation performed by the communication apparatus (for example, the terminal device) in the foregoing method embodiments. The input/output interface 2220 is configured to implement a sending-related and/or receiving-related operation performed by the communication apparatus (for example, the terminal device) in the foregoing method embodiments.

An embodiment of this application further provides a computer-readable storage medium. The computer-readable storage medium stores computer instructions for implementing a method performed by the communication apparatus (for example, the terminal device) in the foregoing method embodiments.

For example, when a computer program is executed by a computer, the computer is enabled to implement the method performed by the communication apparatus (for example, the terminal device) in the foregoing method embodiments.

An embodiment of this application further provides a computer program product, including instructions. When the instructions are executed by a computer, the method performed by the communication apparatus (for example, the terminal device) in the foregoing method embodiments is implemented.

For explanations and beneficial effects of related content in any one of the apparatuses provided above, refer to the corresponding method embodiments provided above. Details are not described herein again.

In the several embodiments provided in this application, it should be understood that the disclosed apparatuses and methods may be implemented in another manner. For example, the described apparatus embodiments are merely examples. For example, division into the units is merely logical function division and there may be another division manner in actual implementation. For example, a plurality of units or components may be combined or integrated into another system, or some features may be ignored or not performed. In addition, displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When the software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the usable medium includes but is not limited to any medium that can store program code, for example, a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An uplink transmission method, comprising:
sending first uplink information when determining, at a first moment or before the first moment, that a first time domain unit overlaps a second time domain unit, wherein
the first moment is prior to a second moment and is separated from the second moment by first duration, the second moment corresponds to a start moment of the first time domain unit, the first time domain unit is a time domain resource occupied by an n^{th} frequency hopping among m frequency hoppings, the m frequency hoppings are used to transmit a sounding reference signal SRS, the second time domain unit is a time domain resource occupied by the first uplink information, the first duration is associated with at least one of the SRS, the first uplink information, or a physical downlink control channel PDCCH, and the PDCCH is used to schedule the first uplink information.

2. An uplink transmission method, comprising:
sending first uplink information when determining, at a first moment or before the first moment, that a first time domain unit overlaps a second time domain unit, wherein
the first moment is after a third moment and is separated from the third moment by first duration, the third moment corresponds to an end moment of a physical downlink control channel PDCCH, the PDCCH is used to schedule the first uplink information, the first time domain unit is a time domain resource occupied by an n^{th} frequency hopping among m frequency hoppings, the m frequency hoppings are used to transmit a sounding reference signal SRS, the second time domain unit is a time domain resource occupied by the first uplink information, and the first duration is associated with at least one of the SRS, the first uplink information, or the PDCCH.

3. The method according to claim 1 or 2, wherein the sending the first uplink information comprises:
sending the first uplink information on the second time domain unit; and
the method further comprises: sending the SRS on a third time domain unit, wherein the third time domain unit is a part of the first time domain unit other than a part overlapping the second time domain unit.

4. The method according to any one of claims 1 to 3, wherein the first duration is associated with a first subcarrier spacing, and the first subcarrier spacing is associated with at least one of the SRS, the first uplink information, or the PDCCH.

5. The method according to claim 4, wherein the first subcarrier spacing is a smallest subcarrier spacing among a subcarrier spacing for sending the SRS, a subcarrier spacing for sending the first uplink information, and a subcarrier spacing for receiving the PDCCH.

6. The method according to claim 4, wherein the first subcarrier spacing is a smallest subcarrier spacing among a subcarrier spacing for sending the first uplink information and a subcarrier spacing for sending the SRS.

7. The method according to any one of claims 4 to 6, wherein the first duration is determined based on the first subcarrier spacing and duration required for bandwidth part BWP switching.

8. The method according to any one of claims 4 to 7, wherein the first duration is determined based on a capability of a terminal device.

9. The method according to any one of claims 1 to 8, wherein the first uplink information comprises a first uplink channel and/or a first uplink signal, the first uplink channel comprises a physical uplink control channel PUCCH or a physical uplink shared channel PUSCH, the SRS is a first-type SRS, and the first uplink signal comprises a second-type SRS.

10. A communication apparatus, comprising a processing unit and a transceiver unit, wherein the processing unit and the transceiver unit are configured to perform the method according to any one of claims 1 to 9.

11. A communication apparatus, comprising at least one processor, wherein the at least one processor is coupled to at least one memory, and the at least one processor is configured to execute a computer program or instructions stored in the at least one memory, to cause the communication apparatus to perform the method according to any one of claims 1 to 9.

12. A computer-readable storage medium, wherein the computer-readable storage medium stores instructions or program code, and when the instructions or the program code is executed by a processor, the processor is caused to implement the method according to any one of claims 1 to 9.

13. A chip, wherein the chip comprises a processor and a communication interface, the communication interface is configured to receive a data frame and transmit the data frame to the processor, or send the data frame to another communication apparatus other than a communication apparatus comprising the chip, and the processor is configured to perform the method according to any one of claims 1 to 9.
